# EUROPEAN PATENT SPECIFICATION

(11) **EP 3 882 086 B1**
(45) Date of publication and mention of the grant of the patent: **18.12.2024**
(21) Application number: 21163546.1
(22) Date of filing: 18.03.2021
(51) Int. Cl.: B60R 16/023

(54) **SENSORIZED PANEL FOR DETECTION OF AN IMPACT ON A VEHICLE**
SENSORISIERTE PLATTE ZUR ERFASSUNG EINES AUFPRALLS AN EINEM FAHRZEUG
PANNEAU SENSORIEL POUR LA DÉTECTION D'UN IMPACT SUR UN VÉHICULE

(30) Priority: 18.03.2020 IT 202000005779
(43) Date of publication of application: 22.09.2021
(73) Proprietor: Iveco S.p.A., 10156 Torino (IT)
(72) Inventor: AIMO BOOT, Marco, 10072 CASELLE TORINESE (TO) (IT); BERNARDINI, Alessandro, 16123 GENOVA (IT)
(74) Representative: Studio Torta S.p.A.

(56) References cited:
- EP-A1- 1 698 453
- EP-A1- 2 360 061
- WO-A1-2010/042848
- WO-A1-2010/136863
- DE-A1- 102015 201 440

## Description

### TECHNICAL FIELD

The present invention relates to a vehicle panel, such as for example a vehicle body panel, in particular of a hybrid, electric or alternative-powered vehicle such as a gas- or hydrogen-powered vehicle or in general any other vehicle requiring the interruption of an electric circuit following its mechanical breakage.

### STATE OF THE PRIOR ART

Vehicles, in particular electric or hybrid vehicles, comprise functional elements such as parts of electrical equipment, for example, high voltage cables or batteries used to provide adequate energy to electric motors that allow the vehicle to be driven. An example of such electrical parts of use may be represented by the so-called HVIL (High Voltage Interlock) or interlock circuit.

However, in the event of an accident, these electrical equipment parts can remain uncovered due to the breakage of the insulating casings, thus exposing the driver or the rescue crews to a potential risk of electric shock.

For this purpose, it is known to provide protection systems configured to insulate the above-mentioned functional elements, i.e., for example, to insulate the circuits connected to the above-mentioned electrical equipment parts, such as the HVIL circuit, so as to prevent possible electric shock to users.

An example of such a protection system is an opening signal generated by the impact signal which allows the operation of the air-bag system. However, it is known that this signal may be incorrectly generated or may not be generated at all due to a low-impulse impact which, however, is capable of causing significant damage to the vehicle.

In fact, not all impacts in which a vehicle is involved can lead to the deployment of the air bag, but they can obviously cause severe damage to different parts of the vehicle, exposing active parts of the high-voltage electrical system and components connected thereto. Similar damage may involve other parts carrying explosive oxidizing fluids, such as valves of a gas/hydrogen fuel system.

Known system for detecting impacts are disclosed in documents EP2360061 A1, WO2010136863 A1, WO2010042848 A1, EP1698453 A1 or DE102015201440 A1. A prior art panel corresponding to the preamble of claim 1 is disclosed in EP 2360061 A1.

Therefore, there is a need to provide systems for detecting impacts on a vehicle, particularly those causing the breakage of a bumper/body panel, in order to disable any functional operating elements, such as those linked to high-voltage systems, or parts of systems linked to the circulation of explosive oxidizing fluids.

The object of the present invention is to meet the above requirements in an optimized and cost-effective manner.

### SUMMARY OF THE INVENTION

Said object is achieved by means of a sensorized panel and a vehicle comprising this part as claimed in the appended claims.

### BRIEF DESCRIPTION OF THE DRAWINGS

For a better understanding of the present invention, a preferred embodiment is described below by way of non-limiting example and with reference to the accompanying drawings, wherein:
- Figure 1 shows a perspective view of a vehicle comprising a plurality of panels according to the invention;
- Figure 2 shows a perspective view of a part of a panel not making part of the present invention but useful to its understanding; and
- Figure 3 shows a perspective view of a part of a panel according to the invention;
- Figure 4 shows an exploded perspective view of a possible embodiment of a panel according to the invention;
- Figure 5 shows a perspective view of the embodiment in Figure 4;
- Figure 6 shows a perspective view of a further possible embodiment of a panel according to the invention; and
- Figure 7 shows a front view of the embodiment in figure 6.

### DETAILED DESCRIPTION OF THE INVENTION

The reference number 1 indicates a vehicle as a whole, in the non-limiting example illustrated herein a Light Commercial Vehicle, LCV, comprising, as is known, a frame (not shown for simplicity) and a plurality of panels 2 defining the body of the said vehicle 1.

The vehicle 1 also comprises at least one air-bag system 3 of a known type and configured to expand and cushion impacts that may potentially cause damage to the driver or passenger.

The vehicle 1 further comprises an electronic unit 4 configured to control a plurality of vehicle systems, including the above-mentioned air-bag system 3 and functional elements, not shown and configured to allow the operation of the vehicle, such as high voltage electrical equipment parts or control valves connected to the alternative fuel supply and distribution systems on board the vehicle.

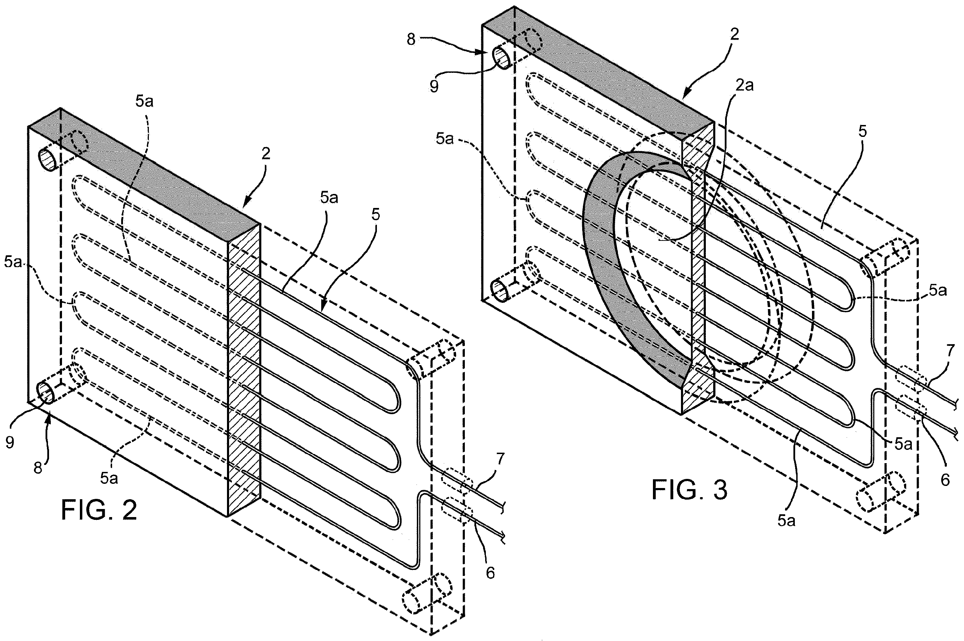

Figure 2 shows a panel 2 not making part of the present invention but useful for its understanding and comprising a body defining any substantially flat shape, i.e., with two dimensions much larger than the thickness of the said body. In the simplified figure, a parallelepiped portion is shown, for example, a body portion made of any shape and material, for example plastic.

According to the invention, the panel 2 comprises a filament 5 made of electrically conductive material carried by the panel 2 and configured to break in case of impact and fracture of the panel 2.

Advantageously, the filament 5 made of electrically conductive material is incorporated inside the body of the panel 2 so that it is not exposed to atmospheric agents and possible mechanical wear or abrasion. Even more advantageously, it is embedded in a plane corresponding to a neutral centre plane of the panel 2. Neutral plane, as is known, refers to the plane in which the bending stresses on the panel 2 are the lowest (theoretically zero) with respect to a bending load imparted thereon.

Still preferably, the filament 5 made of electrically conductive material enters through a first opening 6 inside the body of the panel 2 and exits therefrom through an opening 7 formed therein.

Advantageously, the filament 5 made of electrically conductive material defines a path along the panel 2 so that it extends by at least twice the largest dimension of the panel 2.

In particular, the filament 5 made of electrically conductive material defines a path extending far beyond twice the largest dimension of the panel 2, thereby providing a complex path to cover most of the surface defined by the panel 2.

Again, according to the described embodiment, the filament 5 made of electrically conductive material defines a plurality of coils 5a parallel to the larger side of the panel 2.

As shown, the plurality of coils 5a is embedded within the panel 2 between the first opening 6 and the second opening 7, which are positioned one below the other, respectively, and formed on the smaller edge of the panel 2. In this way, the path of the filament 5 made of electrically conductive material inside the panel 2 defines a "fork" shape due to the plurality of coils 5a connected, at one end and at the other, to the openings 6 and 7.

As is obvious, the panel 2 also comprises connection means 8, here shown as holes 9, configured to allow the panel 2 to be connected to an element carried by the frame of the vehicle 1, for example by means of rivets or threaded elements. Obviously, such connection means 8 can be of any type, such as form-fit or snap-fit couplings.

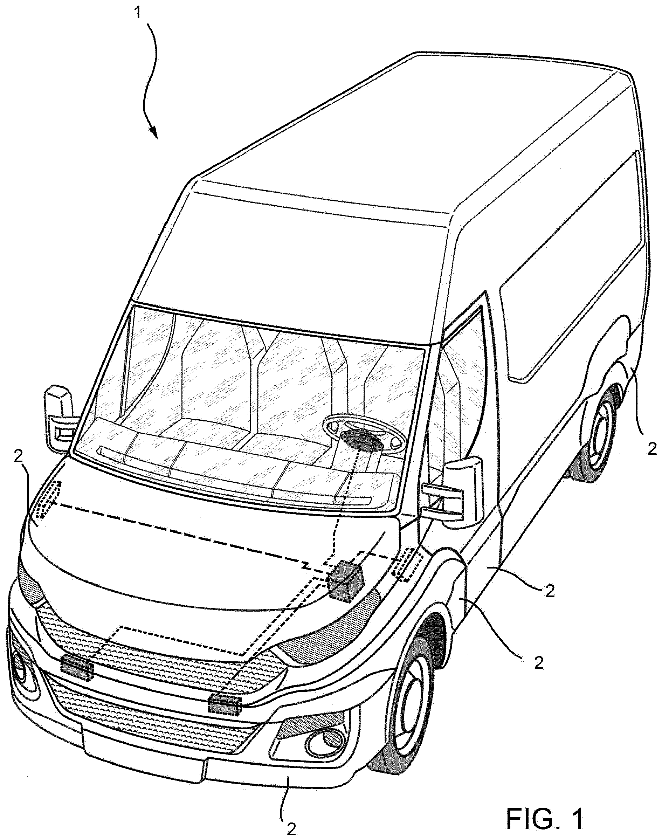

Figure 3 shows a panel 2 according to the invention that comprises the same elements as shown above in Figure 1 except for the below described ones.

However, in this case, the body of the panel 2 defines at least one portion of reduced thickness 2a. In the exemplary embodiment shown, this portion of reduced thickness 2a is a single, circular portion located at the geometric centre of the panel 2.

The filament 5 made of electrically conductive material is also electrically connected to the electronic unit 4 and/or to the above-mentioned functional elements, i.e., for example, the high voltage electrical equipment parts or the control valves connected to the alternative fuel system. Advantageously, this electrical connection is made physically through an electrical connection outside the panel 2.

The operation of the embodiment of the panel 2 described above is as follows.

In the event of an impact without any breakage of one of the panels 2, no change in the electrical resistance in the electric filaments 5 will be detected. However, the electronic unit 4, if necessary, can activate the air-bag system 3.

In the event of an impact with the breakage of one or more panels 2, the resistance of the filament 5 made of electrically conductive material will change, since the breakage of the panel 2 provides for the opening of the electric circuit formed by the filament 5 made of electrically conductive material and by the electronic unit 4 and/or the high voltage electrical equipment parts or the alternative fuel supply control valves. This change in electrical resistance will be processed by the electronic unit 4 to functionally insulate the electrical equipment parts or to insulate the alternative fuel flows. If the electrical connection is made directly by the electric filament with the functional elements of the vehicle, then this change in resistance will directly cause the insulation of the related potentially dangerous element.

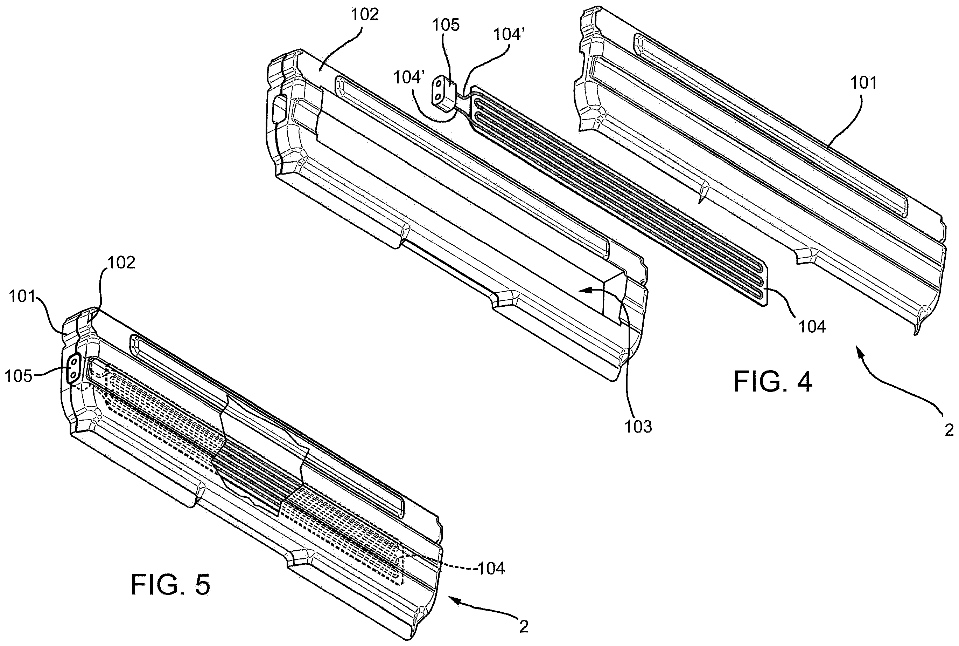

Figures 4 and 5 show a possible embodiment of a panel 2 according to the principles described above.

In Figures 4 and 5, the panel 2 comprises a body 101, and a cover 102 configured to wrap the body 101 and therefore having a shape such as to be form-fit coupled and fixed thereto in a known manner. The cover 102 can be made of high-density polyethylene or other plastic material with similar physical characteristics, and the body 101 can be made of expanded polypropylene (EPP).

The body 101 is configured to define a seat 103 suitable to house the filament 5 made of electrically conductive material. In the example shown, the seat 103 is substantially rectangular and formed in the centre of the body 101. When the cover 102 is coupled to the body 101, the seat 103 is obviously insulated with respect to the external environment.

In the illustrated embodiment, the filament 5 is made as a resistive-coated printed circuit board (PCB) 104 comprising a connector 105 configured to keep two input and output portions 104', 104" of the printed circuit board 104 separated and to connect them to the electronic unit 4 and/or to the above-mentioned functional elements.

In particular, the printed circuit board 104 may comprise portions of reduced thickness, or cuts, (not clearly shown) configured to facilitate the breaking of the printed circuit board 104 in the event of an impact.

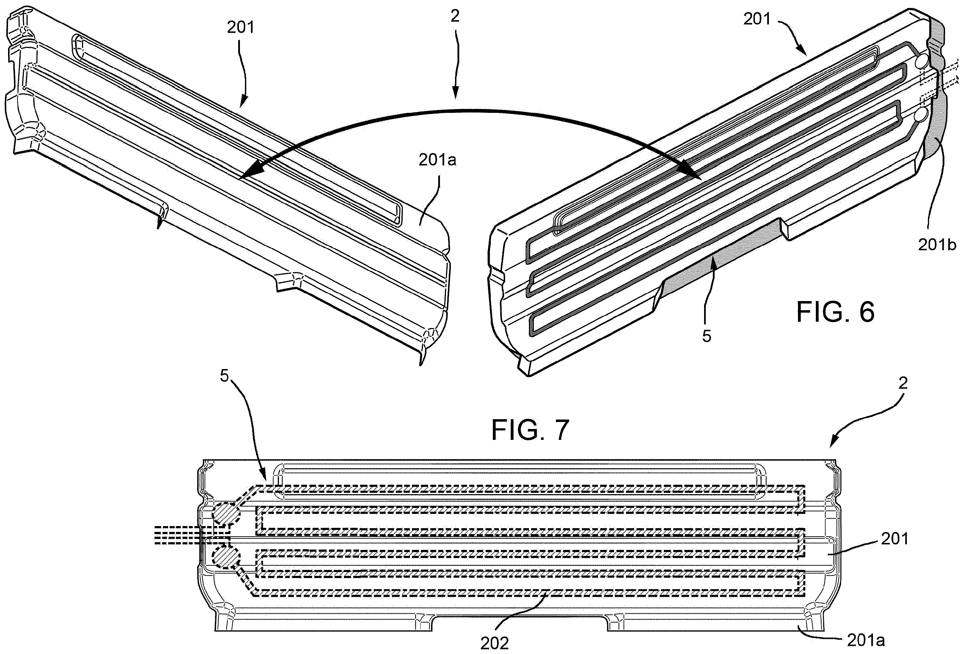

Figures 6 and 7 show a further embodiment of a panel 2 according to the principles described above.

In Figures 6 and 7, the panel 2 comprises a single pair of elements 202 made of high-density polyethylene, for example.

Each element 201 is configured to define a first face 201a and a second face 201b opposite the first, therefore a face 201a facing outwards and a face 201b facing the inside of the vehicle. In particular, the two elements 201 are configured to be coupled on top of each other so that the inner face 201b of one element cooperates in contact with the outer face 201a of the other.

In the illustrated embodiment, the filament 5 is made by deposition of electrically conductive paint 202 on one of the faces 201a, 201b, in particular on the second, inner face 201b of one of the elements 201.

The operation of the embodiments described in Figures 4,5 and 6,7 is similar to that described above for Figures 2 and 3 and will not be repeated for the sake of brevity.

The advantages of a panel 2 according to the invention are clear from the foregoing.

The system of the sensorized panel 2 according to the invention allows the insulation of dangerous functional elements of the vehicle 1 to be released from the deployment of the air-bag system 3 of the vehicle.

In particular, it is possible to provide panels 2 in the most sensitive points of the vehicle exposed to impacts which can cause exposure of the dangerous functional elements of the vehicle.

Moreover, the system set out herein is particularly cost-effective and does not substantially increase the overall dimensions either outside or inside the vehicle 1. An effective example of this reduction is the use of an electrically conductive paint layer to define the filament 5.

It is also possible to create a break in the panel 2 localized in the most critical points of the panel with respect to the exposure of the functional elements of the vehicle 1. An effective example of such localized breaks can be obtained, as illustrated, by reductions in the thickness of the body of the panel 2 or of the elements forming it, or by smaller portions in the filament 5.

Lastly, it is clear that modifications and variations may be made to the panel 2 according to the present invention, without however departing from the scope of protection defined by the claims.

For example, it is clear that the filament 5 can be arranged in any way on the panel 2, or inside it, which can define different shapes and be made of different materials.

Furthermore, it is clear that the reduced-thickness portion 2a can be of a shape and number different from those described, just like the connection of the filament to the electronic unit 4 and/or to the functional elements of the vehicle 1.

Finally, it is clear that the shape defined by the body of the panel 2 and its position on the vehicle 1 can be any shape and position.

## Claims

1. A panel (2) configured to cover a portion of a vehicle (1), said panel (2) comprising at least one body (101, 102; 202) configured to be connected to a portion that is fixed with respect to a frame of said vehicle (1), said panel (2) comprising a filament (5) of electrically conductive material configured to be electrically connected to a functional element of said vehicle (1), wherein at least one body (102) of said panel (2) defines at least one portion (2a) of reduced thickness with respect to the remaining portion of said body (102), **characterised in that** said filament (5) defines a path with respect to said panel body (2), said path extending with respect to said body over most of the surface of said at least one portion (2a) and comprises at least a portion of reduced thickness with respect to other remaining portions of said filament (5).

2. The panel according to claim 1, wherein said filament (5) is incorporated inside said body (101, 102) of said panel (2).

3. The panel according to claim 1 or 2, wherein said filament (5) is placed in the neutral plane of said panel (2).

4. The panel according to one of the preceding claims, wherein said filament (5) is made of metal material.

5. The panel according to one of the preceding claims, wherein said filament (5) defines a path with respect to said panel body (2), said path extending by at least twice the largest dimension of said body in space.

6. The panel according to one of the preceding claims, wherein said filament (5) comprises a printed circuit board (104).

7. The panel according to one of the preceding claims, wherein said filament (5) is made by deposition of electrically conductive paint (202).

8. A vehicle (1) comprising at least one panel (2) according to one of the preceding claims and functional elements electrically connected to said filament (5) so that a breakage of said filament (5) causes the functional insulation of said elements.

9. The vehicle (1) according to claim 8, comprising an electronic unit (4) electrically connected to said filament (5) so that the detection of a breakage of said filament (5) is processed by said electronic unit (4) to control said functional elements so as to functionally insulate them.

## Patentansprüche

1. Eine Verkleidung (2), die ausgeführt ist, einen Teil eines Fahrzeugs (1) abzudecken, wobei die Verkleidung (2) zumindest einen Körper (101, 102; 202) umfasst, der ausgeführt ist, mit einem Teil verbunden zu werden, der relativ zu einem Rahmen des Fahrzeugs (1) fixiert ist, wobei die Verkleidung (2) ein Filament (5) aus einem elektrisch leitendem Material umfasst, wobei das Filament (5) ausgeführt ist, elektrisch mit einem Funktionselement des Fahrzeugs (1) verbunden zu werden, wobei zumindest ein Körper (102) der Verkleidung (2) zumindest einen Bereich (2a) mit reduzierter Dicke im Vergleich zum restlichen Teil des Körpers (102) definiert,
**dadurch gekennzeichnet, dass** das Filament (5) einen Verlauf relativ zum Verkleidungskörper (2) definiert, wobei sich der Verlauf relativ zu dem Körper über den größten Teil der Oberfläche des zumindest einen Bereichs (2a) erstreckt und zumindest einen Bereich mit reduzierter Dicke im Vergleich zu den anderen verbleibenden Teilen des Filaments (5) umfasst.

2. Die Verkleidung nach Anspruch 1, wobei das Filament (5) in den Körper (101, 102) der Verkleidung (2) integriert ist.

3. Die Verkleidung nach Anspruch 1 oder 2, wobei das Filament (5) in der neutralen Ebene der Verkleidung (2) angeordnet ist.

4. Die Verkleidung nach einem der vorhergehenden Ansprüche, wobei das Filament (5) aus Metallmaterial besteht.

5. Die Verkleidung nach einem der vorhergehenden Ansprüche, wobei das Filament (5) einen Verlauf relativ zum Verkleidungskörper (2) definiert, wobei sich der Verlauf in zumindest der doppelten Größe der größten Abmessung des Körpers im Raum erstreckt.

6. Die Verkleidung nach einem der vorhergehenden Ansprüche, wobei das Filament (5) eine Leiterplatte (104) umfasst.

7. Die Verkleidung nach einem der vorhergehenden Ansprüche, wobei das Filament (5) durch Auftragen von elektrisch leitfähiger Farbe (202) hergestellt ist.

8. Ein Fahrzeug (1), umfassend zumindest eine Verkleidung (2) nach einem der vorhergehenden Ansprüche und funktionale Elemente, die elektrisch mit dem Filament (5) verbunden sind, sodass ein Bruch des Filaments (5) die funktionale Isolation dieser Elemente verursacht.

9. Das Fahrzeug (1) nach Anspruch 8, umfassend eine elektronische Einheit (4), die elektrisch mit dem Filament (5) verbunden ist, sodass die Erkennung eines Bruchs des Filaments (5) von der elektronischen Einheit (4) verarbeitet wird, um die funktionalen Elemente so zu steuern, dass sie funktional isoliert werden.

## Revendications

1. Panneau configuré pour couvrir un véhicule (1), ledit panneau (2) comprenant au moins un corps (101, 102 ; 202) configuré pour être raccordé à une partie qui est fixe par rapport à un châssis dudit véhicule (1), ledit panneau (2) comprenant un filament (5) réalisé avec un matériau électriquement conducteur configuré pour être électriquement raccordé à un élément fonctionnel dudit véhicule (1),
dans lequel au moins un corps (102) dudit panneau (2) définit au moins une partie (2a) d'épaisseur réduite par rapport à la partie résiduelle dudit corps (102), **caractérisé en ce que** :
ledit filament (5) définit une trajectoire par rapport audit corps de panneau (2), ladite trajectoire s'étendant par rapport audit corps sur la majeure partie de la surface de ladite au moins une partie (2a) et comprend au moins une partie d'épaisseur réduite par rapport aux autres parties résiduelles dudit filament (5) .

2. Panneau selon la revendication 1, dans lequel ledit filament (5) est incorporé à l'intérieur dudit corps (101, 102) dudit panneau (2).

3. Panneau selon la revendication 1 ou 2, dans lequel ledit filament (5) est placé dans le plan neutre dudit panneau (2).

4. Panneau selon l'une des revendications précédentes, dans lequel ledit filament (5) est réalisé avec un matériau métallique.

5. Panneau selon l'une des revendications précédentes, dans lequel ledit filament (5) définit une trajectoire par rapport audit corps de panneau (2), ladite trajectoire s'étendant selon au moins deux fois la plus grande dimension dudit corps dans l'espace.

6. Panneau selon l'une des revendications précédentes, dans lequel ledit filament (5) comprend une carte de circuit imprimé (104).

7. Panneau selon l'une des revendications précédentes, dans lequel ledit filament (5) est réalisé par dépôt de peinture électriquement conductrice (202).

8. Véhicule (1) comprenant au moins un panneau (2) selon l'une des revendications précédentes et des éléments fonctionnels électriquement raccordés audit filament (5) de sorte qu'une rupture dudit filament (5) provoque l'isolement fonctionnel desdits éléments.

9. Véhicule (1) selon la revendication 8, comprenant une unité électronique (4) électriquement raccordée audit filament (5) de sorte que la détection d'une rupture dudit filament (5) est traitée par ladite unité électronique (4) pour commander lesdits éléments fonctionnels afin de les isoler du point de vue fonctionnel.
